# EUROPÄISCHE PATENTSCHRIFT

(11) **EP 3 135 099 B1**
(45) Veröffentlichungstag und Bekanntmachung des Hinweises auf die Patenterteilung: **09.10.2019**
(21) Anmeldenummer: 15002536.9
(22) Anmeldetag: 27.08.2015
(51) Int. Cl.: A01D 89/00, A01D 84/00

(54) **LANDWIRTSCHAFTLICHE MASCHINE MIT EINER PICKUP-VORRICHTUNG**
AGRICULTURAL MACHINE WITH A PICKUP DEVICE
MACHINE AGRICOLE COMPRENANT UN DISPOSITIF DE RAMASSAGE

(43) Veröffentlichungstag der Anmeldung: 01.03.2017
(73) Patentinhaber: Knüsel, Josef, 6403 Küssnacht am Rigi (CH)
(72) Erfinder: Knüsel, Josef, 6403 Küssnacht am Rigi (CH)
(74) Vertreter: Reb, Carina

(56) Entgegenhaltungen:
- EP-A1- 0 853 872
- DE-A1- 10 320 042
- DE-A1-102010 006 026
- DE-U1-202010 010 038
- US-A1- 2015 096 628

## Beschreibung

Die vorliegende Erfindung betrifft eine landwirtschaftliche Maschine zur Bearbeitung und Förderung von Erntegütern wie beispielsweise Gras, Luzerne, Klee, Futter, Silage, sonstiges Mähgut, Heu, Stroh usw. Ein treffender Oberbegriff hierfür ist Halmgut. Die landwirtschaftliche Maschine weist hierfür mindestens eine Pickup-Vorrichtung auf, d.h. eine Vorrichtung, die mindestens eine rotierende Walze mit daran angeordneten einzelnen Förderelementen oder -zinken für die Aufnahme des Erntegutes vom Boden aufweist.

Bei der landwirtschaftlichen Maschine kann es sich hierbei beispielsweise generell um Schwader, vor allem eben um Pickup-Schwader oder um Bandschwader handeln oder aber auch um Heuwender, Schwadräumer, Ladewagen, Ballenpressen, Feldhäcksler usw.

Primäres Ziel solcher Pickup-Vorrichtungen ist einerseits, das Erntegut möglichst schonend aufzunehmen. Die eiweißreichen Blätter sollen hierbei möglichst vollständig vom Boden mit aufgenommen werden und nicht nur die eiweißärmeren und schwerer verdaulichen Stiele. Andererseits soll weitestgehend vermieden werden, Erde und Steinchen mit aufzunehmen.

Um die Aufnahme des Erntegutes hinsichtlich Aufnahme- und Ablagewinkel zu optimieren, sind sogenannte "gesteuerte" Pickup-Vorrichtungen entwickelt worden, bei denen die einzelnen Förderelemente oder -zinken auf einer exzentrischen Kurvenbahn geführt sind. Die Mechanik, welche diesen exzentrischen Kurvenbahnen zugrunde liegt, ist allerdings aufwändig, wartungsintensiv und teuer.

Weitere, konzeptbedingte Nachteile der gesteuerten Pickup-Vorrichtungen sind relativ niedrige Arbeitsgeschwindigkeit und ein relativ ungleichmäßiger Futter-oder Halmgutfluss, der sich gerne mal verstopfen kann.

Ungesteuerte Pickup-Vorrichtungen hingegen haben den Nachteil, dass sie vor allem kurzes, nasses Futter deutlich weniger sauber aufnehmen, d.h., der Verschmutzungsgrad des Futters mit Erde und Steinchen ist ziemlich hoch. Außerdem sind die ungesteuerten Pickup-Vorrichtungen auf hohe Drehzahlen und aggressive Zinkenstellung von harten Zinken angewiesen.

Beide oder vielmehr alle bekannten Systeme funktionieren bergab bei gebotenen niedrigen Geschwindigkeiten nicht optimal, weil sie das Futter- bzw. Halmgut dann einfach nur noch aufnehmen und hochwerfen, aber nicht nach hinten über die Pickup-Walze hinweg auf das Querförderband bringen.

Die Offenlegungsschrift DE 103 20 042 A1 offenbart eine Landwirtschaftsmaschine, die sowohl zum Kreiseln oder Zetten, als auch zum Schwaden geeignet ist. Hierfür sind eine Material-Aufnehmer-Walze und eine Material-Beförderer-Walze, sowie ein Querförderband angeordnet, wobei das Letztere um einen Drehpunkt wegklappbar ist. Es steht also die Vereinigung zweier Funktionen oder vielmehr zweier bisher unterschiedlicher Landmaschinen im Vordergrund, nicht jedoch eine Optimierung des Futterflusses beim Schwaden.

Die Aufgabe der vorliegenden Erfindung ist, unter Vermeidung der oben aufgezeigten Nachteile eine neue landwirtschaftliche Maschine mit einer Pickup-Vorrichtung zu stellen, welche die Aufnahme und die Weitergabe, d.h. den sogenannten Futterfluss des Futter- bzw. Halmgutes nochmals verbessert und generell in ihren Eigenschaften und ihrer Anwendung optimiert ist.

Die Lösung der Aufgabe besteht in der Bereitstellung einer landwirtschaftlichen Maschine gemäß Anspruch 1 und eines Verfahrens gemäß Anspruch 14.

Dabei besteht die Lösung der Aufgabe zunächst in der Anordnung von einer ersten rotierenden Pickup-Walze in bekannter Form und einer darüber ohne Bodenkontakt angeordneten, gegenläufig rotierenden Förderhilfe bzw. Gegenrechen bzw. Haspel. Diese Förderhilfe kann ebenfalls eine Walze mit einzelnen Förderelementen oder -zinken sein, aber auch ein einstückig durchgehendes Walzenprofil, auf dessen mögliche Ausgestaltungsformen im Folgenden noch eingegangen wird.

Die zu der Pickup-Walze gegenläufige Rotationsrichtung der Förderhilfe bewirkt, im Unterschied zu dem passiven Weiterleiten des Futter- bzw. Halmgutes durch ein Niederhalter-Blech oder -Rollen, ein aktives Übernehmen, Weiterleiten und Ablegen des Futter- bzw. Halmgutes, vorzugsweise auf ein dahinter quer angeordnetes Förderband. Dieses Querförderband wiederum ist wahlweise im oder gegen den Uhrzeigersinn bedienbar und somit kann eine Ablage des Futter- bzw. Halmgutes wahlweise links oder rechts vom Fahrzeug oder Traktor erfolgen.

Eine bevorzugte Ausgestaltungsvariante einer erfindungsgemäßen landwirtschaftlichen Maschine mit einer Pickup-Vorrichtung wird vorne oder hinten an dem Fahrzeug oder Traktor montiert, vorzugsweise mittels eines Dreipunkt-Anbaubockes, der jedoch nicht starr und fix mit dem Fahrzeug oder Traktor verbunden ist, sondern pendelnd. Hierfür ist zwischen der Vorderseite des Dreipunkt-Anbaubockes und einem Tragrahmen der Pickup-Vorrichtung ein zentrales Drehlager vorgesehen, das frei schwingen kann, sich Bodenquerneigungen anpassend. Optional kann diese Schwingbewegung um die Rotationsachse des zentralen Drehlagers federunterstützt sein.

Der Antrieb der Pickup-Walze erfolgt bei einer erfindungsgemäßen landwirtschaftlichen Maschine mit einer Pickup-Vorrichtung vorzugsweise separat steuerbar, weiterhin vorzugsweise hydraulisch. Es sind jedoch auch mechanische oder elektrische Antriebe gut realisierbar. Der Antrieb der erfindungsgemäßen Förderhilfe kann an den Antrieb der Pickup-Walze gekoppelt sein, beispielsweise mittels einer Zahn- oder Keilriemen- oder Zahnradgetriebe-Anordnung. Es ist jedoch bevorzugt, ebenfalls vorzugsweise hydraulisch, auch den Antrieb und die Rotationsgeschwindigkeit der Förderhilfe separat ansteuerbar auszugestalten.

Eine erfindungsgemäße landwirtschaftlichen Maschine mit einer Pickup-Vorrichtung umfasst einen Verstell-Mechanismus der Förderhilfe, mit Hilfe dessen die relative Höhe der Förderhilfe zu der Pickup-Walze adaptierbar ist, vorzugsweise fernbedient vom Fahrzeug oder Traktor aus, während des laufenden Arbeitens. Des Weiteren umfasst dieser Verstell-Mechanismus auch eine Verstellmöglichkeit der Förderhilfe in der Horizontalen, d.h. ein wahlweises Platzieren der Rotationsachse der Förderhilfe vor, annähernd gleich weit oder hinter die Rotationsachse der Pickup-Walze. Es bietet sich an, diesen Verstell-Mechanismus mittels Hydraulik-Kolben zu realisieren.

Es ist möglich, die Pickup-Walze in einer einzigen Walze auszugestalten, zugunsten einer verbesserten Anpassbarkeit an welliges Gelände kann es jedoch vorgesehen sein, die Pickup-Walze aus mehreren Teilwalzen bestehen zu lassen.

Bei zwei Teilwalzen kann an jeder Außenseite einer Teilwalze ein Antrieb vorgesehen sein. In diesem Falle genügt ein Verbindungsgelenk zwischen den Teilwalzen, welches lediglich in der Lage ist, eine Vertikalbewegung dieses Verbindungsgelenkes entlang einer Vertikalachse bzw. eine Verschränkung der beiden Teilwalzen zuzulassen. Sofern hingegen ein einziger Antrieb für beide Teilwalzen vorgesehen ist oder sofern mehr als zwei Teilwalzen angeordnet sind, so sind Kardangelenke als Verbindungsgelenke erforderlich, mindestens einseitig teleskopisch axial verschiebbar gelagert.

Die Förderhilfe kann ebenfalls in einer einzigen Walze, oder aber auch in mehreren Teilwalzen realisiert sein. Bei der Anordnung einer einzigen, starren Pickup-Walze empfiehlt sich die Ausgestaltung der Förderhilfe in mehreren Teilwalzen, verbunden mit einem oder mehreren Gelenken, insofern, als dass ein Blockieren oder Verstopfen der Pickup-Vorrichtung bei großen Halmgut-Knäueln vermieden wird. Die Gelenke sind in diesem Fall vorzugsweise mit einem Wegbegrenzer so limitiert, dass sie gegen den Druck eines solchen Halmgut-Knäuels zwar eine Öffnungsbewegung der Förderhilfen-Teilwalzen nach oben erlauben, aber wenn wieder ohne Druck, wieder parallel zu der Pickup-Walze ausgerichtet sind.

Im Falle der Anordnung einer Pickup-Walze, die aus mehreren und mit Gelenken miteinander verbundenen Teilwalzen besteht, so ist es bei einer entsprechenden Ausgestaltungsvariante einer erfindungsgemäßen landwirtschaftlichen Maschine mit einer Pickup-Vorrichtung vorgesehen, die Förderhilfe symmetrisch mit Teilwalzen und sie verbindenden Gelenken auszugestalten und die Gelenkanordnungen der Pickup-Teilwalzen mit denjenigen der Förderhilfen-Teilwalzen zu koppeln. Auf diese Weise ist eine landwirtschaftliche Maschine mit einer an das Bodengelände adaptierbaren Pickup-Vorrichtung realisiert, und Förderhilfen-Teilwalzen behalten ihren optimalen Abstand zu den Pickup-Teilwalzen immer bei.

Eine erfindungsgemäße Pickup-Vorrichtung umfasst des Weiteren ein rückseitiges Leitblech, welches das Halmgut auf das quer angeordnete Förderband leitet. Darüber hinaus kann die Pickup-Vorrichtung eine Abdeckung aufweisen, die vorzugsweise halbrund ausgestaltet ist.

Die Abdeckung kann beispielsweise auf ebenfalls halbrund ausgestalteten Tragarmen lose aufgelegt sein. Mindestens zwei Tragarme sind auf jeden Fall Bestandteil des Tragrahmens einer erfindungsgemäßen Pickup-Vorrichtung und tragen die mindestens eine Förderhilfen-Walze und den oder die Antriebe der Förderhilfe. Die Tragarme sind vorzugsweise an dem Tragrahmen mittels pendelnder Gelenke angeordnet und weiterhin kann auch die mindestens eine Förderhilfen-Walze ebenfalls in solchen pendelnden Gelenken gelagert sein.

Eine erfindungsgemäße landwirtschaftliche Maschine mit einer Pickup-Vorrichtung oder besser gesagt eine erfindungsgemäße Pickup-Vorrichtung ist vorzugsweise mit mindestens zwei Gleitkufen an ihrer Unterseite ausgestattet. Selbstverständlich kommen auch Rollen in Betracht. Sowohl Gleitkufen, als auch Rollen können optional mit Stoßdämpfern angeordnet sein.

Wie in Absatz [0010] bereits erwähnt, kann eine erfindungsgemäße Förderhilfe eine Walze mit einzelnen Förderelementen oder -zinken sein, aber auch ein einstückig durchgehendes Walzenprofil. Zunächst kommt also eine klassische Form in Betracht, analog zu der Pickup-Walze, mit einzelnen Förderelementen in Form von Förderzinken, die optional zwischen Abstreif-Blechen angeordnet sein können. Als weitere einzelne Förderelemente kommen im Querschnitt hakenkreuz-, stern-, windrad- oder bürstenförmige Ausformungen in Betracht. All diese Formen können als einzelne Förderelemente ausgeprägt sein, aber auch als wenige, entsprechend breit ausgestaltete Förderelemente oder gar als ein einziges, einstückiges Förderelement, das sich über die gesamte Breite der Förderhilfen-Walze erstreckt. Als eine günstige und sehr gut funktionierende Ausgestaltungsvariante hat sich ein durchgehendes Blechprofil mit vier Flügeln erwiesen. Dieses Blechprofil kann optional auch Perforationen oder Ausstanzungen oder eine glattflächige Gitterstruktur aufweisen, funktioniert aber möglicherweise deshalb besonders gut, weil die Flügel fächer- oder propellerartig einen Sog und Luftstoß erzeugen, der wiederum den Futter- bzw. Gutfluss optimiert.

Die einzelnen Förderelemente bzw. deren Förderzinken oder -flügel können optional geriffelt sein oder umgekehrt reibungsmindernd glattgeschliffen oder poliert sein, oder aber auch haftungsverbessernd oberflächenbeschichtet oder generell beschichtet oder gummiert sein.

Als Materialien, die für die Fertigung der einzelnen Förderelemente in Betracht kommen, sei vor allem rostfreier Stahl oder vielmehr Federstahl erwähnt, aber es kommen auch Kunststoffe, textilverstärkter Kautschuk, Leder, GFK und Carbon in Frage.

Eine erfindungsgemäße landwirtschaftliche Maschine oder besser gesagt eine erfindungsgemäße Pickup-Vorrichtung kann grundsätzlich mit einer mechanischen Steuerung eine exzenterförmige Bewegung der einzelnen Förderzinken aufweisen, kommt aber ganz gut mit einem zentral angeordneten und angetriebenen Rohr oder Vierkant-Rohr aus, an dem die einzelnen Förderzinken oder -flügel zentrisch oder aber auch dezentrisch versetzt angeordnet sein können.

In einer einfachen und bevorzugten Ausgestaltungsvariante umfasst die Förderhilfe ein Vierkant-Rohr, an dessen vier Seiten Gewindelöcher für die Montage von vier Förderelement-Reihen vorgesehen sind.

Es wurde allerdings beobachtet, dass eine Anordnung der Förderzinken in Reihen, üblicherweise sind dieses vier, fünf oder sechs Reihen, nicht immer wirklich optimal für die Erzeugung eines schön fließenden Futter- oder Gutflusses ist. Durch das Eingreifen am Boden aller Zinken einer Reihe auf einmal, gefolgt durch eine Pause bis zum erneuten Eingreifen der nächsten Reihe, ist der Kraftaufwand ungleichmäßig bzw. der Kraftfluss zerstückelt.

Es ist somit eine weitere gestellte Aufgabe der vorliegenden Patentanmeldung, den Kraft- und Futterfluss gleichmäßiger auszugestalten.

Die Lösung zu dieser Aufgabe ist die Anordnung eines Antriebsstranges bzw. einer oder mehrerer Pickup-Walzen mit Hilfe eines Vierkant-Rohres, welches verdreht ist. Der Verdrehungswinkel liegt in einem Bereich von 10 bis 180 Grad und beträgt vorzugsweise 90 Grad. Weiterhin vorzugsweise sind an jeder Vierkant-Seite des verdrehten Vierkant-Rohres mittels Gewindebohrungen die einzelnen Förderelemente angeordnet und bilden somit vier sich helikoidal erstreckende Förderzinken-Reihen. Oder es werden Doppelzinken montiert, die zwei helikoidale Zinkenreihen ergeben, die sich gegenüberliegen. Auf diese Weise erfolgt immer ein Bodenkontakt bzw. eine Aufnahmebewegung mehrerer Förderzinken auf einmal und dieses bleibt kontinuierlich so. Die Aufnahme erfolgt nicht mehr stoßweise.

Analoge Anordnungen sind gut auch mit einem Sechskant-Rohr realisierbar. An so einem Sechskant-Rohr oder aber auch an einer klassisch ausgestalteten, runden Hauptwelle können die Förderelemente oder -zinken randomisiert oder in Blöcken angeordnet sein.

Nicht nur die Pickup-Walze oder -Walzen können durch eine solche helikoidale Anordnung der Förderelemente gekennzeichnet sein, sondern auch die Förderhilfen-Walze oder - Walzen. Hieraus ergibt sich die Möglichkeit, die Pickup-Walzen und die Förderhilfen-Walzen bezüglich Anordnung und Rotationsgeschwindigkeit so aufeinander abzustimmen, dass immer eine schlangenförmige Zinkenreihe einer Förderhilfen-Walze in einen Zwischenraum zwischen zwei kongruent schlangenförmigen Zinkenreihen einer Pickup-Walze eingreift. Die Möglichkeit dieser ineinander eingreifenden Anordnung der Zinkenreihen besteht natürlich auch bei den eingangs beschriebenen geraden Zinkenreihen.

Wie bereits erwähnt, kann der Antrieb einer erfindungsgemäßen Pickup-Vorrichtung mechanisch oder elektrisch erfolgen, es ist aber bevorzugt, einen hydraulischen Antrieb zu realisieren. Sofern das Fahrzeug bzw. der Traktor mit einer hinreichend steuerbaren Hydraulik-Anlage mit genügend einzeln ansteuerbaren Einzel-Anschlüssen ausgerüstet ist, so kann idealerweise ein Einzel-Anschluss für die Steuerung der Pickup-Walze, ein zweiter für die Steuerung der Förderhilfe und ein dritter für die Steuerung des quer angeordneten Förderbandes verwendet werden. In denjenigen Fällen hingegen, in denen die Hydraulik-Anlage des Fahrzeugs oder Traktors nicht genügend Einzel-Anschlüsse aufweist, wäre eine erfindungsgemäße Pickup-Vorrichtung nicht mehr einzeln und optimal ansteuerbar.

Die Lösung dieser weiteren, dritten Aufgabe besteht in der weiterhin erfindungsgemäßen Integration des oder der Reservoire für das Hydrauliköl, sowie von Ölpumpenmotoren, Ölfiltern, Anschlüssen, Ventilen und Steuerung in den Dreipunkt-Anbaubock bzw. in sein Gehäuse. Eine erfindungsgemäße Pickup-Vorrichtung ist somit autark und benötigt lediglich einen Hauptantrieb, der von dem Fahrzeug bzw. Traktor abgegriffen wird. Dieser Hauptantrieb für die Ölpumpenmotoren oder einen zentralen Ölpumpenmotor der Pickup-Vorrichtung kann erstrecht wieder hydraulisch sein, aber auch elektrisch oder mechanisch, indem das erforderliche Gesamt-Antriebsdrehmoment von der Haupt-Zapfwelle des Fahrzeugs oder Traktors abgegriffen wird.

Optional können die beschriebenen drei autarken Einzelsteuerungen der Pickup-Vorrichtung mit Fernbedienungen oder einem Fernbedienungs-Pult von der Fahrerkabine aus bedient werden.

Die offenbarten unterschiedlichen Ausgestaltungsvarianten einer erfindungsgemäßen landwirtschaftlichen Maschine mit einer Pickup-Vorrichtung sind hinsichtlich der nicht grundfunktionsrelevanten Merkmale beliebig miteinander kombinierbar. So sind beispielsweise alle beschriebenen Ausgestaltungsvarianten mit den beschriebenen Förderelementen oder -profilen oder mit dem beschriebenen Querförderband oder mit der pendelnden Aufhängung des Dreipunkt-Anbaubockes kombinierbar. Dieses ungeachtet eines mechanischen, elektrischen oder hydraulischen Antriebs oder einer Kombination hiervon und auch ungeachtet dessen, ob der Antrieb der Förderhilfe an den Antrieb der Pickup-Walze gekoppelt ist oder nicht. Auch der beschriebene Verstell-Mechanismus ist mit allen Ausgestaltungsvarianten kombinierbar, genauso wie die Ausgestaltungsvarianten mit Teilwalzen, sei es für die Pickup-Walze oder für die Förderhilfe oder für beides. Die gleiche reziproke Kombinierbarkeit gilt für alle Ausgestaltungsvarianten untereinander, egal, ob sie gerade oder helikoidale Zinkenreihen haben oder ob eine Hydraulik-Anlage integriert ist oder nicht.

Die vorliegende Anmeldung offenbart ein Verfahren zur Schwadformung und -ablage von Futter- bzw. Halmgut mit einer landwirtschaftlichen Maschine mit einer Fahrtrichtung und einer Fahrtrichtungs-Achse und mit mindestens einer Pickup-Vorrichtung, mit folgenden grundsätzlichen Verfahrensschritten:
a)- Betätigen eines ersten Rotationsantriebs einer Pickup-Walze;
b)- Betätigen eines zweiten, gegenläufigen Rotationantriebs einer Förderhilfe;
c)- Betätigen eines dritten Rotationsantriebs eines quer angeordneten Förderbandes;
d)- falls erforderlich, Einstellen und Adaptieren der Rotationsgeschwindigkeiten der drei Rotationsantriebe zueinander;
e)- falls erforderlich, Einstellen eines vertikalen Höhenabstandes und eines horizontalen Versatzes der Rotationsachse der Förderhilfe entlang der Fahrtrichtungs-Achse vor, gleich weit oder hinter die Rotationsachse der Pickup-Walze;
f)- In-Fahrt-Setzen der landwirtschaftlichen Maschine auf einer landwirtschaftlichen Fläche mit darauf liegendem Futter- bzw. Halmgut;
g)- falls erforderlich, Einstellen und Adaptieren der Rotationsgeschwindigkeiten der drei Rotationsantriebe während der Fahrt;
h)- falls erforderlich, Einstellen und Adaptieren des vertikalen Höhenabstandes und des horizontalen Versatzes der Rotationsachse der Förderhilfe entlang der Fahrtrichtungs-Achse vor, gleich weit oder hinter die Rotationsachse der Pickup-Walze.

Eine erfindungsgemäße landwirtschaftliche Maschine mit einer Pickup-Vorrichtung bringt folgende Vorteile:
- Das Futter- bzw. Halmgut wird schonend aufgenommen und schonend weiterverarbeitet.
- Das Futter- bzw. Halmgut ist qualitativ hochwertig, weil die eiweißreichen Blätter dran bleiben.
- Das Futter- bzw. Halmgut weist einen niedrigen Verschmutzungsgrad auf.
- Eine erfindungsgemäße Pickup-Vorrichtung kommt ohne teure Exzenterführungen aus.
- Es sind hohe Arbeitsgeschwindigkeiten möglich.
- Es findet ein gleichmäßiger Futterfluss ohne Überwerfen statt.
- Die Maschine verstopft sich nicht so leicht.
- Sie ist ideal für das Wenden von Stroh und das Schwaden von beliebigen Futterarten.
- Obwohl sie ungesteuert ist, kommt sie ohne aggressive Zinkenstellung und harte Zinken aus.
- Sie funktioniert auch bergab, das Futter rollt nicht nach vorne.
- Es werden lockere Schwaden erzeugt, die gut nachtrocknen können.
- Das Futter wird auch bei schneller Fahrt nicht aufgewirbelt.
- Die Ablage der Schwade kann wahlweise links oder rechts erfolgen.
- Falls eine separate Steuerung für die Förderhilfe vorgesehen ist, findet ein steuerbares und aktives Weiterleiten des Futters statt.
- Eine erfindungsgemäße Pickup-Vorrichtung ist sowohl vorne, als auch hinten an einem Fahrzeug oder Traktor montierbar.
- Bei Frontanbau gelangt kein Staub durch den Traktor in das Futter.
- Der Traktor fährt nicht über das Futter drüber.
- Die pendelnde Aufhängung des Dreipunkt-Anbaubockes garantiert eine gute Anpassung an Bodenquerneigungen.
- Die Position der Förderhilfe zu der Pickup-Walze ist in zwei Achsen verstellbar, falls vorgesehen, mit einer Fernbedienung aus der Fahrerkabine heraus.
- Falls die Pickup-Walze in mehrere Teilwalzen aufgeteilt ist, gewährleistet die landwirtschaftliche Maschine eine gute Geländeanpassung.
- Mit einem Vierkant-Rohr ist eine gute und günstige Hauptwelle realisiert.
- Falls die helikoidale Zinkenanordnung vorgesehen ist, findet ein gleichmäßiger und homogener Kraftaufwand statt.
- Falls vorgesehen, ist eine erfindungsgemäße landwirtschaftliche Maschine mit einer weiterhin erfindungsgemäßen Pickup-Vorrichtung von der Hydraulik-Anlage des Traktors unabhängig.
- Die erfindungsgemäße Pickup-Vorrichtung zeichnet sich durch hohe Lebensdauer und geringen Wartungsaufwand aus.

Weitere oder vorteilhafte Ausgestaltungen einer erfindungsgemäßen landwirtschaftlichen Maschine mit einer Pickup-Vorrichtung bilden die Gegenstände der abhängigen Ansprüche.

Die Bezugszeichenliste ist Bestandteil der Offenbarung.

Anhand von Figuren wird die Erfindung symbolisch und beispielhaft näher erläutert. Die Figuren werden zusammenhängend und übergreifend beschrieben. Sie stellen schematische und beispielhafte Darstellungen dar und sind nicht maßstabsgetreu, auch in der Relation der einzelnen Bestandteile zueinander nicht. Gleiche Bezugszeichen bedeuten das gleiche Bauteil, Bezugszeichen mit unterschiedlichen Indizes geben funktionsgleiche oder ähnliche Bauteile an.

Es zeigen dabei
Fig. 1 eine schematische und perspektivische Darstellung einer beispielhaften landwirtschaftlichen Maschine mit einer Pickup-Vorrichtung bzw. einer Pickup-Vorrichtung mit einer Förderhilfe;
Fig. 2 eine schematische und perspektivische Rückansicht der landwirtschaftlichen Maschine mit einer Pickup-Vorrichtung bzw. der Pickup-Vorrichtung mit einer Förderhilfe aus der Fig. 1;
Fig. 3 eine schematische und perspektivische Darstellung einer zweiten beispielhaften landwirtschaftlichen Maschine mit einer Pickup-Vorrichtung bzw. einer Pickup-Vorrichtung mit einer Förderhilfe;
Fig. 4 eine schematische Darstellung eines beispielhaften Förderhilfen-Antriebs mittels eines Vierkant-Rohres als Sitz für Förderelemente;
Fig. 5 eine schematische und perspektivische Darstellung eines verdrehten Vierkant-Rohres als Sitz für die Förderelemente bzw. -zinken;
Fig. 6 eine schematische Seitenansicht der zweiten beispielhaften landwirtschaftlichen Maschine mit einer Pickup-Vorrichtung bzw. der Pickup-Vorrichtung mit einer Förderhilfe aus der Fig. 3;
Fig. 7 eine schematische Seitenansicht einer Ausgestaltungsvariante einer erfindungsgemäßen landwirtschaftlichen Maschine mit einer Pickup-Vorrichtung, bei der eine Förderhilfe entlang einer Vertikal- sowie einer Horizontal-Achse verstellbar ist;
Fig. 8 eine schematische Darstellung einer landwirtschaftlichen Maschine mit einer Pickup-Vorrichtung, bei der sowohl die Pickup-Walze, als auch die Förderhilfen-Walze in mehrere Teilwalzen aufgeteilt ist und diese Teilwalzen mit Gelenken verbunden sind;
Fig. 9a eine schematische Seitenansicht einer ersten Ausgestaltungsvariante eines Förderelements oder -profils;
Fig. 9b eine schematische Seitenansicht einer zweiten Ausgestaltungsvariante eines Förderelements oder -profils;
Fig. 9c eine schematische Seitenansicht einer dritten Ausgestaltungsvariante eines Förderelements oder -profils;
Fig. 9d eine schematische Seitenansicht einer vierten Ausgestaltungsvariante eines Förderelements oder -profils;
Fig. 10a eine schematische Draufsicht auf einen Traktor bei einem Arbeitseinsatz mit drei erfindungsgemäßen Pickup-Vorrichtungen und
Fig. 10b eine schematische Draufsicht auf einen Traktor bei einem Arbeitseinsatz mit ebenfalls drei erfindungsgemäßen Pickup-Vorrichtungen, aber in einer leicht abgeänderten Anordnung.

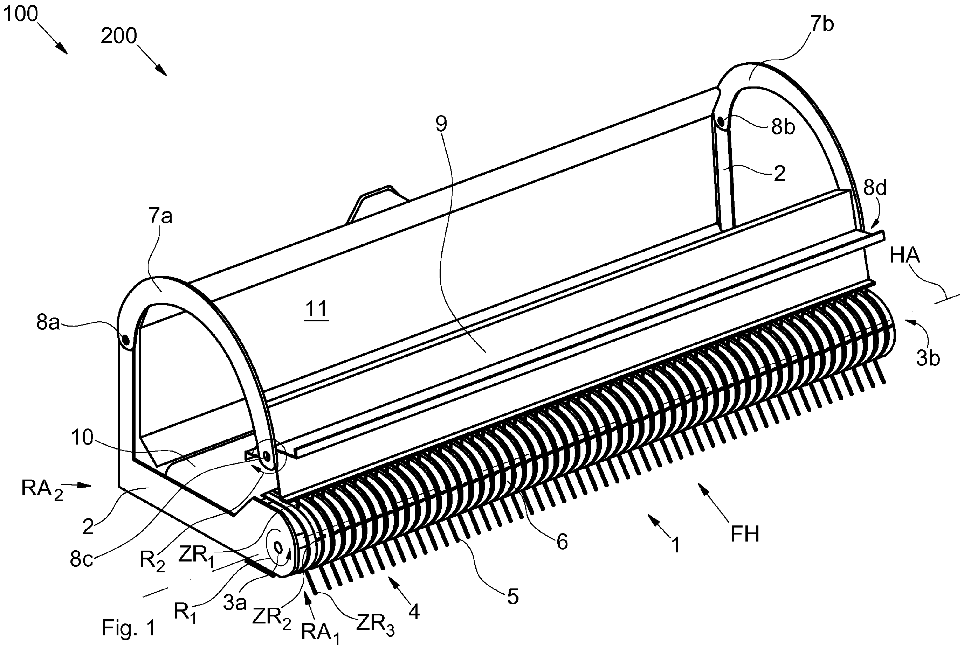

In der Fig. 1 ist eine beispielhafte erste landwirtschaftliche Maschine 100 angedeutet bzw. eine Pickup-Vorrichtung 200 schematisch und perspektivisch dargestellt. Eine Pickup-Walze 1 ist an einem Tragrahmen 2 der Pickup-Vorrichtung 200 so angeordnet, dass er in Drehlagern 3a und 3b um eine Horizontal-Achse HA rotieren kann. Die Pickup-Walze 1 umfasst einzelne, aufgereiht angeordnete Förderelemente 4 mit einzelnen Förderzinken 5. Diese Förderzinken 5 formen beispielsweise fünf Reihen von Förderzinken 5 aus, von denen in der vorliegenden Darstellung gerade angeordnete Zinkenreihen ZR₁-ZR₃ sichtbar sind. Die Pickup-Walze 1 kann des Weiteren noch Abstreif-Bleche 6 umfassen und - ob auf exzentrischen Kurvenbahnen oder nicht - die einzelnen Förderelemente 4 in einer Rotation R₁ drehen. Ein mindestens einseitig an der Pickup-Walze 1 vorgesehener Rotationsantrieb RA₁ ist nicht näher dargestellt.

An dem Tragrahmen 2 sind des Weiteren zwei annähernd halbrunde Tragarme 7a und 7b angeordnet, vorzugsweise in Pendelgelenken oder sogenannten Kugelaugen-Kupplungen 8a und 8b. Vorzugsweise ebenfalls in solchen Kugelaugen-Kupplungen 8c und 8d ist eine erfindungsgemäße Förderhilfe FH in Form eines vierflächigen Blechprofils 9 angeordnet, ebenfalls drehbar in einer zu der Rotation R₁ gegenläufigen Rotation R₂, im Folgenden Gegenrotation R₂ genannt. Ein Rotationsantrieb RA₂, der diese Gegenrotation R₂ erzeugt, ist erneut nicht näher dargestellt.

Durch diese Anordnung ist gewährleistet, dass Futter- bzw. Halmgut von den Förderzinken 5 der Pickup-Walze 1 vom Boden aufgenommen, hochgehoben, anschließend von der Förderhilfe FH bzw. dem Blechprofil 9 übernommen und weitergeleitet wird und auf ein Querförderband 10 abgelegt wird. Ein Leitblech 11 leitet über die Breite des Querförderbandes 10 hinausschießendes Futter- bzw. Halmgut wieder auf das Querförderband 10 zurück.

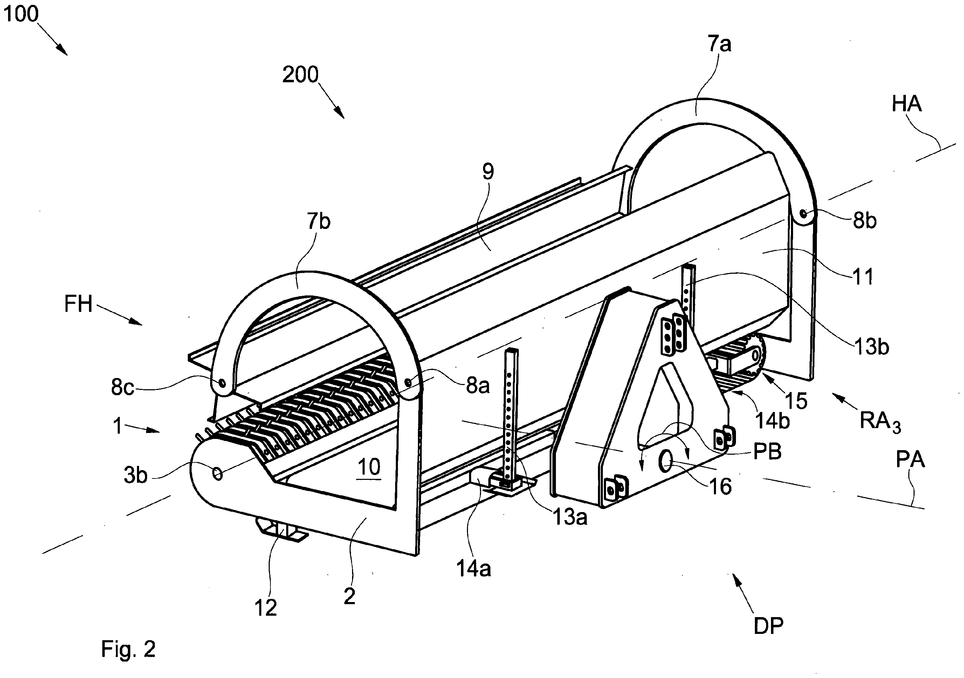

Die Fig. 2 zeigt die Pickup-Vorrichtung 200 aus der Fig. 1 in einer schematischen und perspektivischen Ansicht von schräg hinten. Hierbei sind neben den bereits bekannten Komponenten eine Gleitkufe 12, sowie Stützfüße 13a und 13b zu sehen. Die Letzteren sind in Stützfuß-Halterungen 14a und 14b höhenverstell- und mittels eines Sicherungsstiftes fixierbar. Die Stützfuß-Halterung 14b ist allerdings durch einen Dreipunkt-Anbaubock DP verdeckt, der mittels einer Pendelrohr-Aufhängung 16 in der Relation zu der Horizontal-Achse HA in einer Pendelbewegung PB um eine Pendelachse PA schwenken kann.

Des Weiteren ist in dieser Fig. 2 noch erkennbar, dass der Antrieb des Querförderbandes 10 - wahlweise das Futter- bzw. Halmgut links oder rechts ablegend, also gegen oder im Uhrzeigersinn - mittels eines Zahnriemenantriebs 15 bewerkstelligt ist. Dieser Zahnriemenantrieb 15 stellt gleichzeitig einen Rotationsantrieb RA₃ des Querförderbandes 10 dar.

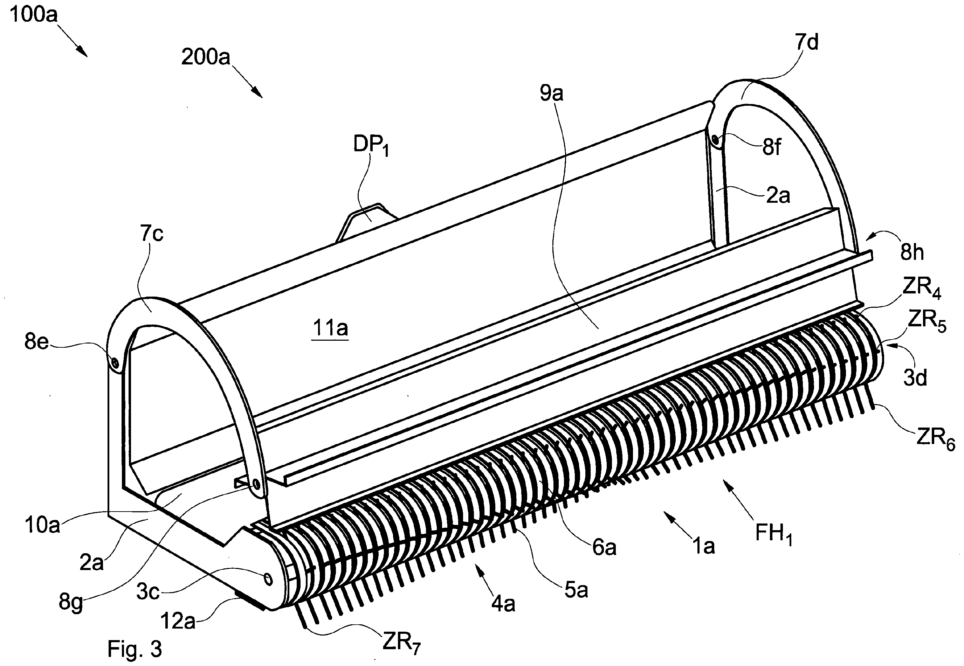

In der Fig. 3 ist eine weitere Pickup-Vorrichtung 200a schematisch und perspektivisch gezeigt, die zusammen mit einem nicht näher dargestellten Fahrzeug oder Traktor eine landwirtschaftliche Maschine 100a ergeben würde. Die überwiegende Mehrheit der Komponenten ist aus den bisherigen Figuren 1 und 2 bereits bekannt und somit lediglich mit Referenznummern mit fortlaufendem Index dargestellt.

Was diese Ausgestaltungsvariante jedoch kennzeichnet, ist eine Pickup-Walze 1a mit helikoidal angeordneten Zinkenreihen ZR₄-ZR₇. So wie in etwa dargestellt, kann die Verdrehung einer Zinkenreihe ZR₄-ZR₇ ca. 90 Grad betragen.

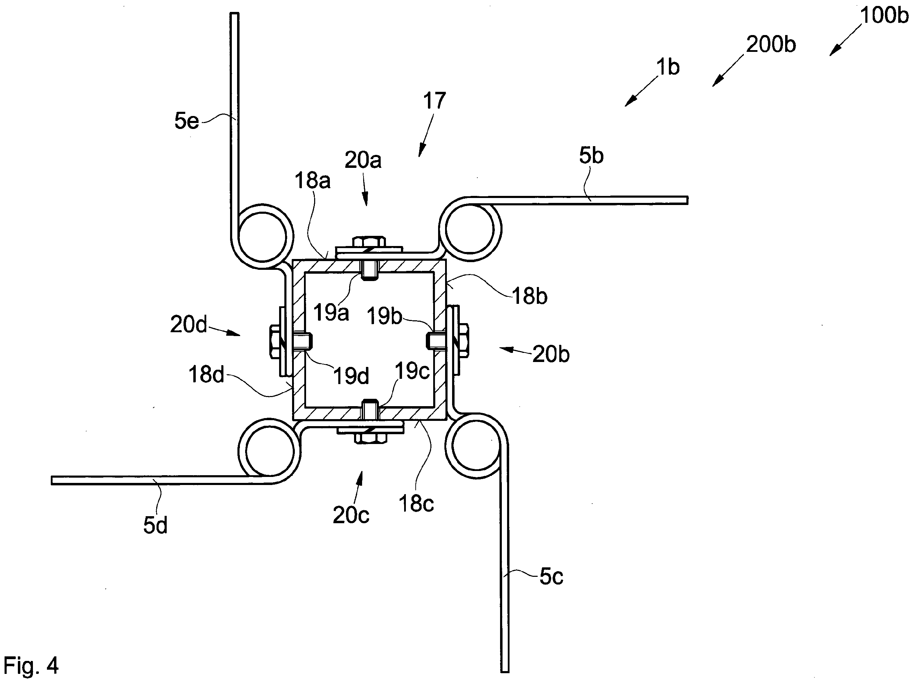

Die Fig. 4 zeigt schematisch, dass eine weitere landwirtschaftliche Maschine 100b bzw. eine Pickup-Vorrichtung 200b dadurch gekennzeichnet sein kann, dass sie nebst den bekannten Komponenten eine Pickup-Walze 1b aufweist, die im Wesentlichen ein Vierkant-Rohr 17 umfasst. Dieses Vierkant-Rohr wiederum weist vier Vierkant-Seiten 18a-18d auf, in denen jeweils eine Gewindebohrung 19a-19d angebracht ist. Darin ist jeweils mittels einer Schraubenbefestigung mit Grover-Scheibe 20a-20d eine Förderzinke 5b-5e befestigt.

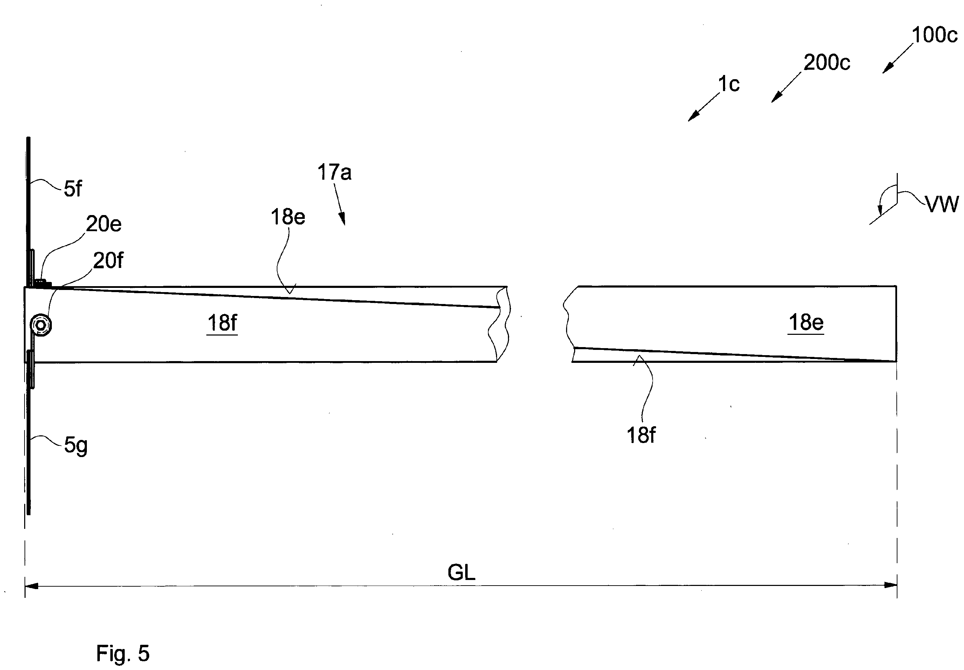

In der Fig. 5 ist schematisch dargestellt, dass eine weitere landwirtschaftliche Maschine 100c bzw eine Pickup-Vorrichtung 200c bzw. eine Pickup-Walze 1c ein Vierkant-Rohr 17a umfassen kann, das verdreht ist. Ein Verdrehungswinkel VW von annähernd 90 Grad kommt dadurch zustande, indem eine obere Vierkant-Seite 18e Seitenfläche und eine seitliche Vierkant-Seite 18f Unterseite wird. Auf diese Weise kann, analog zu Fig. 3, eine helikoidale Anordnung von lediglich nur zwei gezeigten, aber an einer Gesamtlänge GL angeordneten Anzahl von Förderzinken 5f und 5g realisiert sein.

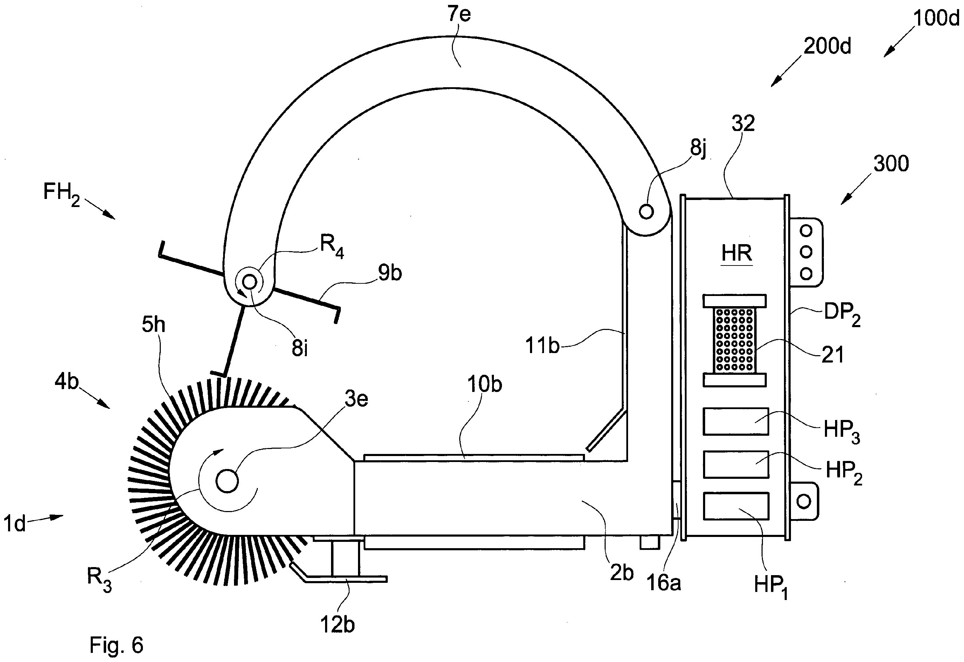

Die Fig. 6 zeigt eine weitere landwirtschaftliche Maschine 100d bzw. Pickup-Vorrichtung 200d, die im Wesentlichen der Ausgestaltungsvariante aus der Fig. 3 entspricht und somit die dort bereits bekannten Komponenten nur mit fortgeführten Indizes angezeigt sind. Was dieses Beispiel jedoch ausmacht, ist eine in die Pickup-Vorrichtung 200d integrierte Hydraulik-Anlage 300. Hierfür ist ein Hydrauliköl-Reservoir HR innerhalb eines Gehäuses 32 eines Dreipunkt-Anbaubocks DP₂ vorgesehen. Des Weiteren sind ein Ölfilter 21 und drei Hydraulikpumpen HP₁-HP₃ in das Gehäuse 32 integriert, vorzugsweise jeweils eine Hydraulik-Pumpe für die Steuerung einer Pickup-Walze 1d, einer Förderhilfe FH₂ sowie eines Querförderbandes 10b.

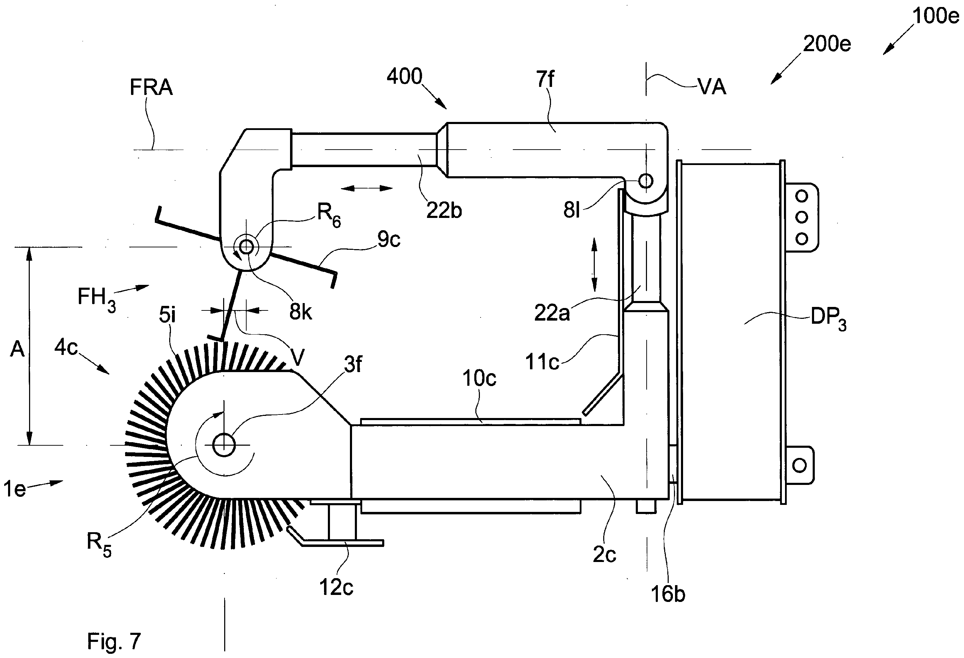

In der Fig. 7 ist eine Ausgestaltungsvariante einer erfindungsgemäßen landwirtschaftlichen Maschine 100e respektive eine erfindungsgemäße Pickup-Vorrichtung 200e mit einem Verstell-Mechanismus 400 gezeigt. Bei dieser Ausgestaltungsvariante sind ein Tragrahmen 2c und ein Tragarm 7f jeweils als Hydraulik-Kolben 22a und 22b ausgestaltet. Dadurch ist eine Förderhilfe FH₃ in Relation zu einer Pickup-Walze 1e entlang einer Vertikal-Achse VA höhenverstellbar und entlang einer Fahrtrichtungs-Achse FRA so einstellbar, dass die Förderhilfe FH₃ wahlweise in Fahrtrichtung vor, auf gleicher Höhe oder hinter der Pickup-Walze 1e angeordnet ist. Mit anderen Worten, ist es möglich, einen Höhenabstand A zwischen der Förderhilfe FH₃ und der Pickup-Walze 1e einzustellen und aber auch einen Versatz V.

Ansonsten weist die Pickup-Vorrichtung 200e in bekannter Manier ein Drehlager 3f auf, in dem die Pickup-Walze 1e in einer Rotation R₅ dreht. In einer Kugelaugen-Kupplung 8k dreht ein Blechprofil 9c in einer Gegenrotation R₆ gegenläufig.

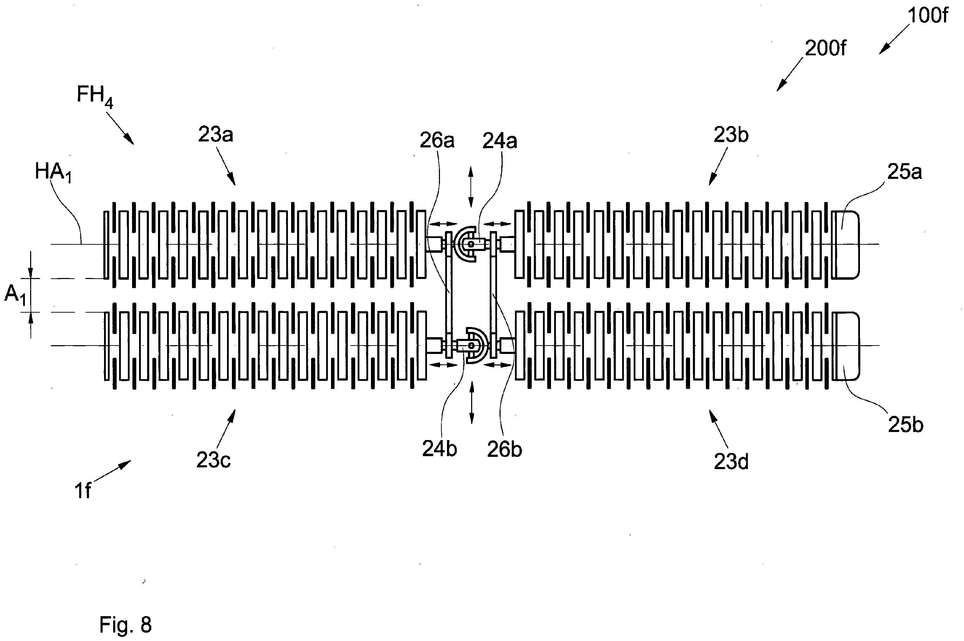

Die Fig. 8 zeigt eine landwirtschaftliche Maschine 100f bzw. Pickup-Vorrichtung 200f, die sich dadurch auszeichnet, dass sowohl eine Pickup-Walze 1f, als auch eine analog ausgestaltete Förderhilfe FH₄ in Teilwalzen 23a-23d aufgeteilt sind. Die Teilwalzen 23a und 23b der Förderhilfe FH₄ bzw. die Teilwalzen 23c und 23c der Pickup-Walze 1f sind jeweils mit einem Kardangelenk 24a bzw. 24b miteinander verbunden. Ein jeweils an den Teilwalzen 23b und 23d angeordneter Antrieb 25a und 25b treibt somit auch die Teilwalzen 23a und 23c an. Gleichzeitig jedoch gewährleisten die Kardangelenke 24a und 24b Auf- und Abwärtsbewegungen je nach Bodenform. Damit die Verschränkung der Teilwalzen 23a-23d stattfinden kann, sind die beiden Kardangelenke 24a und 24b mindestens an einer Seite teleskopisch verschiebbar gelagert. Des Weiteren, damit ein Höhenabstand A₁ zwischen den Teilwalzen 23a-23d für den Futterfluss gewahrt bleibt, sind die Wellen der Kardangelenke 24a und 24b mit wälzlagergelagerten Kupplungen 26a und 26b miteinander verbunden.

In einer weiteren Ausgestaltungsform kann die Pickup-Walze 1f eine einzige, fixe Walze sein, aber die Förderhilfe weist ein Gelenk auf. Dieses Gelenk erlaubt ebenfalls Auf- und Abwärtsbewegungen, beispielsweise für die Aufnahme besonders dicker Futterknäuel, ist aber allerdings mittels einer Begrenzung bis auf eine Horizontal-Achse HA₁ limitiert.

Dadurch, dass eine landwirtschaftliche Maschine mit einer Pickup-Vorrichtung einzeln gesteuerte Teilwalzen aufweisen kann, wäre es möglich, beim Beschreiben von Kurven die äußere Teilwalze mit einer höheren Rotationsgeschwindigkeit anzusteuern und dadurch wiederum könnte die Futter- bzw. Halmgut-Aufnahme in den Kurven optimiert sein.

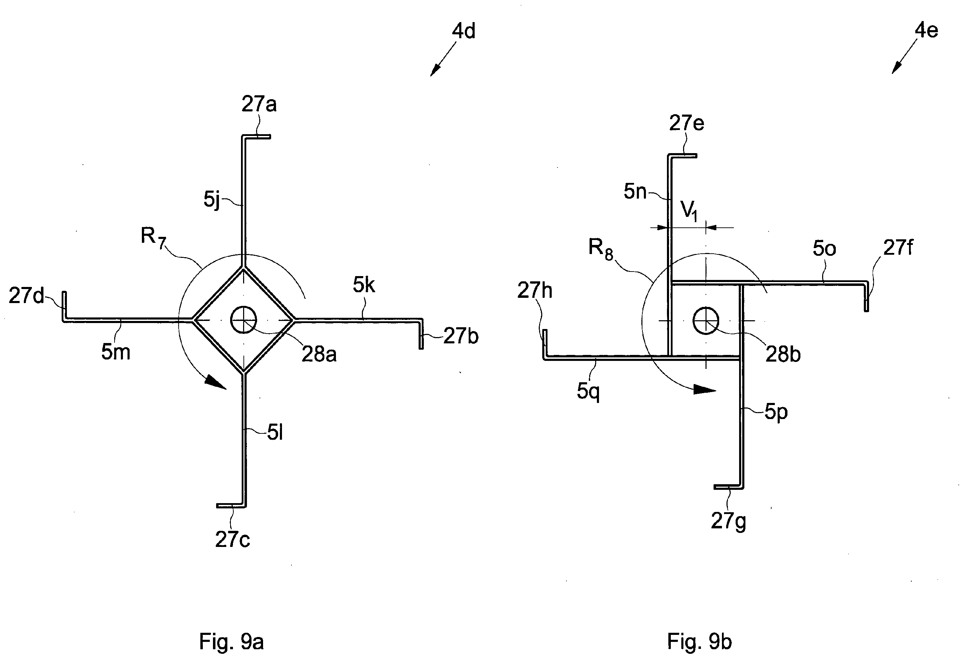

In der Fig. 9a ist ein beispielhaftes Förderelement oder -profil 4d gezeigt. Es kann also ein einzelnes Element sein, aber auch ein Profil, das sich über die gesamte Breite der Pickup-Vorrichtung erstreckt. Es kann des Weiteren sowohl für die Pickup-, als auch für die Förderhilfen-Walzen vorgesehen sein. Dieses gilt für alle im Folgenden gezeigten Förderelement- oder -profil-Ausgestaltungsvarianten 4d-4g.

Das Förderelement oder -profil 4d formt vier einzelne Förderzinken 5j-5m um einen Achsmittelpunkt 28a aus, die an ihren distalen Enden wiederum jeweils einen Fortsatz 27a-27d ausformen. Diese Fortsätze 27a-27d sind entgegen einer Rotation R₇ des Förderelementes oder -profils 4d angeordnet und sollen verhindern, dass das Futter- bzw. Halmgut an den Enden hängen bleibt.

Die Fig. 9b zeigt eine weitere Ausgestaltungsvariante eines Förderelementes oder -profils 4e, bei dem Förderzinken 5n-5q jeweils um einen Versatz V₁ von einem Achsmittelpunkt 28b versetzt angeordnet sind.

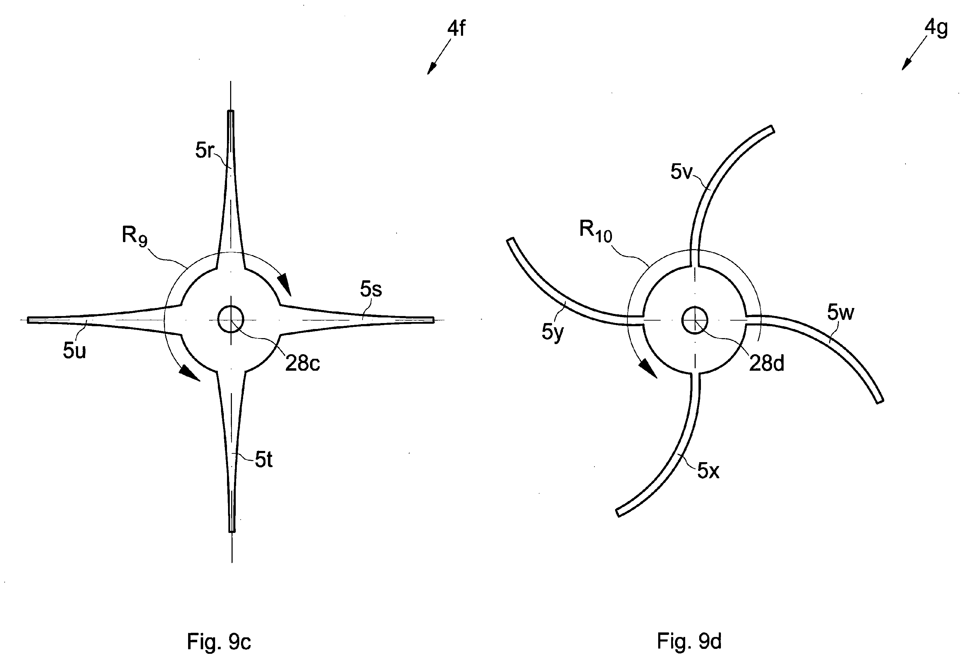

In der Fig. 9c ist ein sternförmiges Förderelement oder -profil 4f schematisch dargestellt, bei dem eine Rotation Rg wahlweise sowohl gegen, als auch im Uhrzeigersinn stattfinden kann.

Die Fig. 9d zeigt ein windradähnliches Förderelement oder -profil 4g mit gegen eine Rotationsrichtung R₁₀ gebogenen Förderzinken 5v-5y.

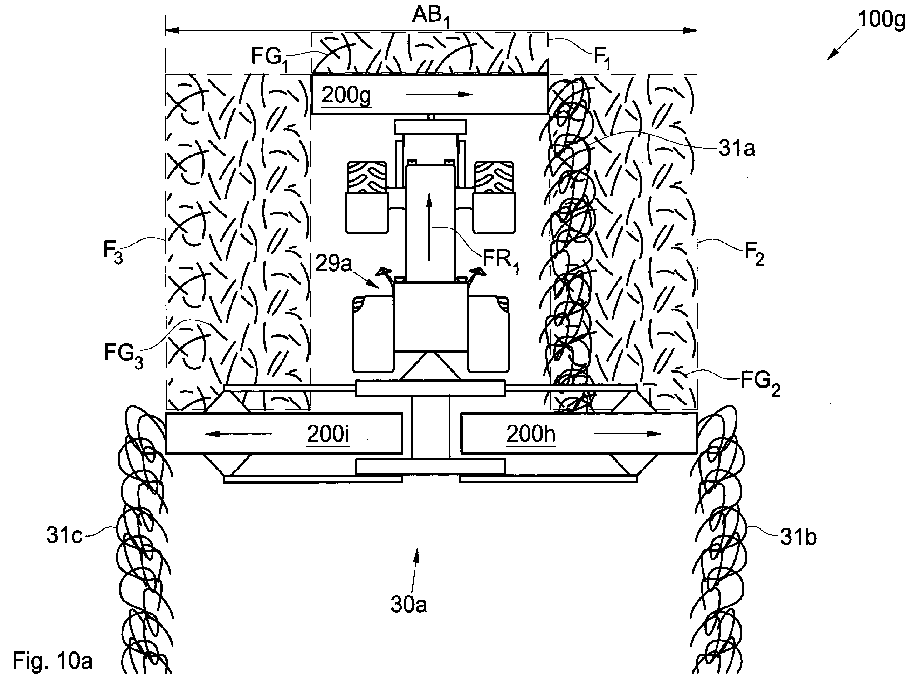

In der Fig. 10a ist in einer schematischen Draufsicht gezeigt, wie ein Arbeitseinsatz einer landwirtschaftlichen Maschine 100g mit einem Traktor 29a konfiguriert sein kann. Eine Pickup-Vorrichtung 200g im Frontanbau kann gestoßen werden und zwei mit einer Doppeldeichsel 30a versetzt angeordneten Pickup-Vorrichtungen 200h und 200i gezogen werden.

Eine Arbeitsbreite AB₁ setzt sich zusammen aus einer landwirtschaftlichen Fläche F1, welche die Pickup-Vorrichtung 200g abräumt, vorteilhafterweise, ohne dass der Traktor 29a über Futter- bzw. Halmgut FG₁ drüberfährt und legt es in einer Schwade 31a beispielsweise in Fahrtrichtung FR₁ rechts ab. Eine landwirtschaftliche Fläche F₂, mit Futter- bzw. Halmgut FG₂, inklusive der Schwade 31a wird von der Pickup-Vorrichtung 200h aufgenommen und in einer Schwade 31b abgelegt. Das Gleiche gilt analog für die Pickup-Vorrichtung 200i, wobei diese ohne eine weitere Schwade nur Futter- bzw. Halmgut FG₃ von einer landwirtschaftlichen Fläche F₃ aufnehmen muss und in einer Schwade 31c ablegt. Dieses wiederum würde sich ändern, wenn die Pickup-Vorrichtung 200g durch Umstellen der Rotation ihres Querförderbandes von Rechts- auf Linksablage wechselt.

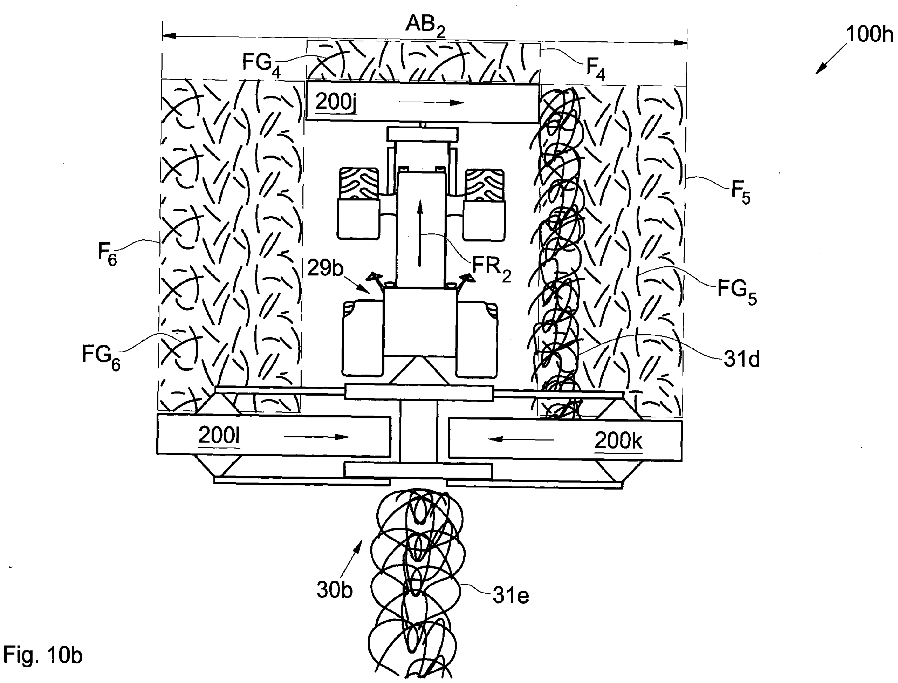

Die Fig. 10b zeigt eine optionale Konfiguration einer landwirtschaftlichen Maschine 100h, bei der an einem Traktor 29b in einer Fahrtrichtung FR₂ vorne in Frontanbau eine Pickup-Vorrichtung 200j und hinten, erneut versetzt angeordnet an einer Doppeldeichsel 30b, zwei Pickup-Vorrichtungen 200k und 2001 montiert sind. Bei dieser Konfiguration arbeiten die beiden hinteren Pickup-Vorrichtungen 200k und 2001 einander zu und legen eine große Schwade 31e mittig ab.

### Bezugszeichenliste

- 1, 1a-1f: - Pickup-Walze
- 2, 2a-2c: - Tragrahmen
- 3a-3f: - Drehlager
- 4, 4a-4g: - Förderelement, -profil
- 5, 5a-5y: - Förderzinke
- 6, 6a: - Abstreif-Blech
- 7a-7f: - Tragarm
- 8a-81: - Kugelaugen-Kupplung
- 9, 9a-9c: - Blechprofil
- 10, 10a-10c: - Querförderband
- 11, 11a-11c: - Leitblech
- 12, 12a-12c: - Gleitkufe
- 13a, 13b: - Stützfuß
- 14a, 14b: - Stützfuß-Halterung
- 15: - Zahnriemen-Antrieb
- 16, 16a, 16b: - Pendelrohr-Aufhängung
- 17, 17a: - Vierkant-Rohr
- 18a-18f: - Vierkant-Seite
- 19a-19d: - Gewindebohrung
- 20a-20f: - Schraubenbefestigung mit Grover-Scheibe
- 21: - Ölfilter
- 22a, 22b: - Hydraulik-Kolben
- 23a-23d: - Teilwalze
- 24a, 24b: - Kardangelenk
- 25a, 25b: - Antrieb
- 26a, 26b: - wälzlagergelagerte Kupplung
- 27a-27h: - Fortsatz
- 28a-28d: - Achsmittelpunkt
- 29a, 29b: - Traktor
- 30a, 30b: - Doppeldeichsel
- 31a-31e: - Schwade
- 32: - Gehäuse von DP
- 100, 100a-100h: - landwirtschaftliche Maschine
- 200, 200a-200l: - Pickup-Vorrichtung
- 300: - Hydraulik-Anlage
- 400: - Verstell-Mechanismus
- A, A₁: - Höhenabstand
- AB₁, AB₂: - Arbeitsbreite
- DP, DP₁-DP₃: - Dreipunkt-Anbaubock
- F₁-F₆: - landwirtschaftliche Fläche
- FG₁-FG₆: - Futter- bzw. Halmgut
- FH, FH₁-FH₄: - Förderhilfe
- FR₁, FR₂: - Fahrtrichtung
- FRA: - Fahrtrichtungs-Achse
- GL: - Gesamtlänge
- HA, HA₁: - Horizontal-Achse
- HP₁-HP₃: - Hydraulikpumpe
- HR: - Hydrauliköl-Reservoir
- PA: - Pendelachse
- PB: - Pendelbewegung
- R₁, R₃, R₅: - Rotation
- R₂, R₄, R₆: - Gegenrotation
- R₇-R₁₀: - Rotation von 4
- RA₁-RA₃: - Rotationsantrieb
- V: - Versatz zwischen FH und 1
- V₁: - Versatz zwischen 5 und 28
- VA: - Vertikal-Achse
- VW: - Verdrehungswinkel
- ZR₁-ZR₇: - Zinkenreihe

## Patentansprüche

1. Landwirtschaftliche Maschine (100, 100a-100h) mit einer Fahrtrichtung (FR₁, FR₂) und einer Fahrtrichtungs-Achse (FRA) und mit mindestens einer Pickup-Vorrichtung (200, 200a-2001), wobei die Pickup-Vorrichtung (200, 200a-2001) mindestens eine in einer Rotation (R₁, R₃, R₅) rotierbare und mittels mindestens eines Rotationsantriebs (RA₁) angetriebene Pickup-Walze (1, 1a-1f) mit Förderelementen (4, 4a-4g) und Förderzinken (5, 5a-5y) zur Aufnahme von Futter- bzw. Halmgut (FG₁-FG₆) von einer landwirtschaftlichen Fläche (F₁-F₆) sowie mindestens eine in einer Gegenrotation (R₂, R₄, R₆) rotierbare Förderhilfe (FH, FH₁-FH₄) umfasst, wobei die Förderhilfe (FH, FH₁-FH₄) mittels mindestens eines Rotationsantriebs (RA₂) angetrieben ist, **dadurch gekennzeichnet, dass** ein Verstell-Mechanismus (400) für die Förderhilfe (FH₃) angeordnet ist und ein vertikaler Höhenabstand (A) sowie ein horizontaler Versatz (V) der Rotationsachse der Förderhilfe (FH₃) entlang der Fahrtrichtungs-Achse (FRA) wahlweise vor, gleich weit oder hinter die Rotationsachse der Pickup-Walze (1e) verstellbar sind.

2. Landwirtschaftliche Maschine (100, 100a-100h) mit mindestens einer Pickup-Vorrichtung (200, 200a-2001), nach Anspruch 1, **dadurch gekennzeichnet, dass** die Förderzinken (5a, 5h, 5i) der Pickup-Walze (1, 1a-1f) und/oder der Förderhilfe (FH, FH₁-FH₄) in mindestens einer helikoidalen Zinkenreihe (ZR₄-ZR₇) angeordnet sind.

3. Landwirtschaftliche Maschine (100, 100a-100h) mit mindestens einer Pickup-Vorrichtung (200, 200a-2001), nach einem der vorhergehenden Ansprüche, **dadurch gekennzeichnet, dass** die Pickup-Vorrichtung (200, 200a-2001) ein Querförderband (10, 10a-10c) umfasst, das mittels eines Rotationsantriebes (RA₃) wahlweise im oder gegen den Uhrzeigersinn rotierbar ist.

4. Landwirtschaftliche Maschine (100, 100a-100h) mit mindestens einer Pickup-Vorrichtung (200, 200a-2001), nach einem der vorhergehenden Ansprüche, **dadurch gekennzeichnet, dass** die Pickup-Vorrichtung (200, 200a-2001) einen Dreipunkt-Anbaubock (DP, DP₁-DP₃) umfasst, der an der Pickup-Vorrichtung (220, 200a-2001) bzw. an einem Tragrahmen (2, 2a-2c) der Pickup-Vorrichtung (200, 200a-2001) in einer Pendelrohr-Aufhängung (16, 16a, 16b) befestigt ist und in einer Pendelbewegung (PB) um eine Pendelachse (PA) schwenkbar ist.

5. Landwirtschaftliche Maschine (100, 100a-100h) mit mindestens einer Pickup-Vorrichtung (200, 200a-2001), nach vorhergehendem Anspruch 4, **dadurch gekennzeichnet, dass** die Pendelrohr-Aufhängung (16, 16a, 16b) federunterstützt ist.

6. Landwirtschaftliche Maschine (100, 100a-100h) mit mindestens einer Pickup-Vorrichtung (200, 200a-2001), nach einem der vorhergehenden Ansprüche, **dadurch gekennzeichnet, dass** der Rotationsantrieb (RA₁) der Pickup-Walze (1, 1a-1f) mit dem Rotationsantrieb (RA₂) der Förderhilfe (FH, FH₁-FH₄) gekoppelt ist.

7. Landwirtschaftliche Maschine (100, 100a-100h) mit mindestens einer Pickup-Vorrichtung (200, 200a-2001), nach einem der vorhergehenden Ansprüche 1-5, **dadurch gekennzeichnet, dass** der Rotationsantrieb (RA₁) der Pickup-Walze (1, 1a-1f), der Rotationsantrieb (RA₂) der Förderhilfe (FH, FH₁-FH₄) und der Rotationsantrieb (RA₃) des Querförderbandes (10, 10a-10c) separat und einzeln ansteuerbar sind.

8. Landwirtschaftliche Maschine (100, 100a-100h) mit mindestens einer Pickup-Vorrichtung (200, 200a-2001), nach einem der vorhergehenden Ansprüche 6 oder 7, **dadurch gekennzeichnet, dass** die Rotationsantriebe (RA₁-RA₃) fernbedienbar sind.

9. Landwirtschaftliche Maschine (100, 100a-100h) mit mindestens einer Pickup-Vorrichtung (200, 200a-2001), nach einem der vorhergehenden Ansprüche, **dadurch gekennzeichnet, dass** die Pickup-Walze (1, 1a-1f) mindestens zwei Teilwalzen (23c, 23d) umfasst.

10. Landwirtschaftliche Maschine (100f) mit mindestens einer Pickup-Vorrichtung (200f), nach vorhergehendem Anspruch 9, **dadurch gekennzeichnet, dass** auch die Förderhilfe (FH₄) mindestens zwei Teilwalzen (23a, 23b) umfasst und die Teilwalzen (23a-23d) mit Kardangelenken (24a, 24b) miteinander verbunden sind.

11. Landwirtschaftliche Maschine (100, 100a-100h) mit mindestens einer Pickup-Vorrichtung (200, 200a-2001), nach einem der vorhergehenden Ansprüche, **dadurch gekennzeichnet, dass** die Förderhilfe (FH, FH₁-FH₄) mindestens eine Förderhilfen-Walze mit einzelnen Förderelementen (4, 4a-4g) umfasst.

12. Landwirtschaftliche Maschine (100, 100a-100h) mit mindestens einer Pickup-Vorrichtung (200, 200a-2001), nach einem der vorhergehenden Ansprüche 1-10, **dadurch gekennzeichnet, dass** die Förderhilfe (FH, FH₁-FH₄) ein Förderprofil (4, 4a-4g, 9, 9a-9c) umfasst.

13. Landwirtschaftliche Maschine (100, 100a-100h) mit mindestens einer Pickup-Vorrichtung (200, 200a-2001), nach einem der vorhergehenden Ansprüche, **dadurch gekennzeichnet, dass** die Pickup-Walze (1, 1a-1f) und/oder die Förderhilfen-Walze ein Vierkant-Rohr (17, 17a) mit Vierkant-Seiten (18a-18f) umfasst, an denen Förderzinken (5, 5a-5y) angeordnet sind.

14. Verfahren zur Formung und Ablage von Schwaden (31a-31e) von Futter- bzw. Halmgut (FG₁-FG₆) mit einer landwirtschaftlichen Maschine (100e) mit einer Fahrtrichtung (FR₁, FR₂) und einer Fahrtrichtungs-Achse (FRA) und mit mindestens einer Pickup-Vorrichtung (200e) nach einem der vorhergehenden Ansprüche 3-13, **dadurch gekennzeichnet, dass** folgende Verfahrensschritte ausgeführt werden:
a)- Betätigen des ersten Rotationsantriebs (RA₅) der Pickup-Walze (1e);
b)- Betätigen des zweiten, gegenläufigen Rotationantriebs (RA₆) der Förderhilfe (FH₃);
c)- Betätigen des dritten Rotationsantriebs (RA₃) des quer angeordneten Förderbandes (10c);
d)- Einstellen und Adaptieren der Rotationsgeschwindigkeiten der drei Rotationsantriebe (RA₅, RA₆, RA₃) zueinander;
e)- Einstellen eines vertikalen Höhenabstandes (A) und eines horizontalen Versatzes (V) der Rotationsachse der Förderhilfe (FH₃) entlang der Fahrtrichtungs-Achse (FRA) vor, gleich weit oder hinter die Rotationsachse der Pickup-Walze (1e);
f)- In-Fahrt-Setzen der landwirtschaftlichen Maschine (100e) auf einer landwirtschaftlichen Fläche (F₁-F₆) mit darauf liegendem Futter- bzw. Halmgut (FG₁-FG₆);
g)- Einstellen und Adaptieren der Rotationsgeschwindigkeiten der drei Rotationsantriebe (RA₅, RA₆, RA₃) während der Fahrt;
h)- Einstellen und Adaptieren des vertikalen Höhenabstandes (A) und des horizontalen Versatzes (V) der Rotationsachse der Förderhilfe (FH₃) entlang der Fahrtrichtungs-Achse (FRA) vor, gleich weit oder hinter die Rotationsachse der Pickup-Walze (1e).

## Claims

1. Agricultural machine (100, 100a-100h) having a travel direction (FR₁, FR₂) and a travel direction axis (FRA) and having at least one pickup device (200, 200a-2001), at which the pickup device (200, 200a-2001) comprises at least one pick-up drum (1, 1a-1f) which is rotatable in a rotation (R₁, R₃, R₅) and driven by means of at least one rotary drive (RA₁), the pick-up drum (1, 1a-1f) having conveying elements (4, 4a-4g) and conveyor tines (5, 5a-5y) for the take-up of fodder or stalk (FG₁-FG₆), from an agricultural land area (F₁-F₆), and at least one conveyor aid (FH, FH₁-FH₄) rotatable in a counter-rotation (R₂, R₄, R₆), wherein the conveyor aid (FH, FH₁-FH₄) is driven by means of at least one rotary drive (RA₂), **characterized in that** an adjusting mechanism (400) is arranged for the conveyor aid (FH₃) and a vertical height distance (A) as well as a horizontal offset (V) of the axis of rotation of the conveyor aid (FH₃) along the direction of travel axis (FRA) are selectively adjustable in front of, equidistant to or behind the rotation axis of the pickup drum (1e).

2. Agricultural machine (100, 100a-100h) with at least one pickup device (200, 200a-2001), according to claim 1, **characterized in that** the conveyor tines (5a, 5h, 5i) of the pickup drum (1, 1a-1f) and/or the conveyor aid (FH, FH₁-FH₄) are arranged in at least one helicoidal row of tines (ZR₄-ZR₇).

3. Agricultural machine (100, 100a-100h) with at least one pickup device (200, 200a-2001), according to one of the preceding claims, **characterized in that** the pickup device (200, 200a-2001) comprises a cross conveyor belt (10, 10a-10c) which is selectively rotatable in clockwise or anti-clockwise direction by means of a rotary drive (RA₃).

4. Agricultural machine (100, 100a-100h) with at least one pickup device (200, 200a-2001), according to one of the preceding claims, **characterized in that** the pickup device (200, 200a-2001) comprises a three-point mounting trestle (DP, DP₁-DP₃), which is attached to the pickup device (200, 200a-2001) or to a supporting frame (2, 2a-2c) of the pickup device (200, 200a-2001) in a pendulum tube mounting bracket (16, 16a, 16b) and is rotatable in a pendulum motion (PB) about a pendulum axis (PA), respectively.

5. Agricultural machine (100, 100a-100h) with at least one pickup device (200, 200a-2001), according to preceding claim 4, **characterized in that** the pendulum tube mounting bracket (16, 16a, 16b) is spring supported.

6. Agricultural machine (100, 100a-100h) with at least one pickup device (200, 200a-2001), according to one of the preceding claims, **characterized in that** the rotary drive (RA₁) of the pickup drum (1, 1a-1f) is coupled to the rotary drive (RA₂) of the conveyor aid (FH, FH₁-FH₄).

7. Agricultural machine (100, 100a-100h) with at least one pickup device (200, 200a-2001) according to one of the preceding claims 1-5, **characterized in that** the rotary drive (RA₁) of the pickup drum (1, 1a-1f), the rotary drive (RA₂) of the conveyor aid (FH, FH₁-FH₄) and the rotary drive (RA₃) of the cross conveyor belt (10, 10a-10c) are separately and individually controllable.

8. Agricultural machine (100, 100a-100h) with at least one pickup device (200, 200a-2001), according to one of the preceding claims 6 or 7, **characterized in that** the rotary drives (RA₁-RA₃) are remotely controllable.

9. Agricultural machine (100, 100a-100h) with at least one pickup device (200, 200a-2001), according to one of the preceding claims, **characterized in that** the pickup drum (1, 1a-If) comprises at least two partial drums (23c, 23d).

10. Agricultural machine (100f) with at least one pickup device (200f), according to preceding claim 9, **characterized in that** also the conveyor aid (FH₄) comprises at least two partial drums (23a, 23b) and the partial drums (23a-23d) are connected to each other by cardan joints (24a, 24b).

11. Agricultural machine (100, 100a-100h) with at least one pickup device (200, 200a-2001), according to one of the preceding claims, **characterized in that** the conveyor aid (FH, FH₁-FH₄) comprises at least one conveyor aid drum with individual conveying elements (4, 4a-4g).

12. Agricultural machine (100, 100a-100h) with at least one pickup device (200, 200a-2001), according to one of the preceding claims 1-10, **characterized in that** the conveyor aid (FH, FH₁-FH₄) comprises a conveyor profile (4, 4a-4g, 9, 9a-9c).

13. Agricultural machine (100, 100a-100h) with at least one pickup device (200, 200a-2001), according to one of the preceding claims, **characterized in that** the pickup drum (1, 1a-1f) and/or the conveyor aid drum comprises a square pipe (17, 17a) having square sides (18a-18f) on which conveyor tines (5, 5a-5y) are arranged.

14. Procedure for forming and depositing swaths (31a-31e) of fodder or stalk (FG₁-FG₆) with an agricultural machine (100e) having a direction of travel (FR₁, FR₂) and a direction of travel axis (FRA) and with at least one pickup device (200e) according to one of the preceding claims 3-13, **characterized in that** the following procedure steps are carried out:
a)- actuating the first rotary drive (RA₅) of the pickup drum (1e);
b)- actuating the second, counter-rotating rotary drive (RA₆) of the conveyor aid (FH₃) ;
c)- actuating the third rotary drive (RA₃) of the cross arranged conveyor belt (10c);
d)- adjusting and adapting the rotational speeds of the three rotary drives (RA₅, RA₆, RA₃) relative to each other;
e)- setting a vertical height distance (A) and a horizontal offset (V) of the rotation axis of the conveyor aid (FH₃) along the direction of travel axis (FRA) in front of, equidistant to, or behind the rotation axis of the pickup drum (1e);
f)- setting the agricultural machine (100e) in motion on an agricultural land area (F₁-F₆) with fodder or stalk (FG₁-FG₆) lying on it;
g)- setting and adapting the rotational speeds of the three rotary drives (RA₅, RA₆, RA₃) during travel;
h)- adjusting and adapting the vertical height distance (A) and the horizontal offset (V) of the rotation axis of the conveyor aid (FH₃) along the travel direction axis (FRA) in front of, equidistant to, or behind the rotation axis of the pick-up drum (1e).

## Revendications

1. Machine agricole (100, 100a-100h) avec une direction de déplacement (FR₁, FR₂) et un axe de direction de déplacement (FRA) et avec au moins un dispositif de ramassage (200, 200a-2001), où le dispositif de ramassage (200, 200a-2001) comprend au moins un rouleau de ramassage (1, 1a-1f) rotatif dans une rotation (R₁, R₃, R₅) et au moyen d'au moins un entraînement de rotation (RA₁), avec des éléments de transport (4, 4a-4g) et des dents de transport (5, 5a-5y) pour la prise du fourrage ou des tiges du fourrage (FG₁-FG₆) d'une surface agricole (F₁-F₆) aussi bien qu'au moins un auxiliaire de transport (FH, FH₁-FH₄) rotatif dans une contre-rotation (R₂, R₄, R₆), l'auxiliaire de transport (FH, FH₁-FH₄) étant entraîné par au moins un entraînement de rotation (RA₂), **caractérisée en ce qu'**un mécanisme de réglage (400) est prévu pour l'auxiliaire de transport (FH₃) et un écartement vertical en hauteur (A) ainsi qu'un décalage horizontal (V) de l'axe de rotation de l'auxiliaire de transport (FH₃) le long de l'axe de déplacement (FRA) sont réglables au choix devant, à distance égale ou derrière l'axe de rotation du rouleau de ramassage (le).

2. Machine agricole (100, 100a-100h) avec au moins un auxiliaire de ramassage (200, 200a-2001), selon la revendication 1, **caractérisée en ce que** les dents de transport (5a, 5h, 5i) du rouleau de ramassage (1, 1a-1f) et/ou l'auxiliaire de transport (FH, FH₁-FH₄) sont disposées en au moins une rangée hélicoïdale de dents (ZR₄-ZR₇).

3. Machine agricole (100, 100a-100h) avec au moins un auxiliaire de ramassage (200, 200a-2001), selon l'une des revendications précédentes, **caractérisée en ce que** l'auxiliaire de ramassage (200, 200a-2001) comprend une bande transporteuse transversale (10, 10a-10c) qui, au moyen d'un entraînement rotatif (RA₃), est rotative dans ou contre le sens horaire.

4. Machine agricole (100, 100a-100h) avec au moins un dispositif de ramassage (200, 200a-2001), selon l'une des revendications précédentes, **caractérisée en ce que** le dispositif de ramassage (200, 200a-2001) comprend un attelage trois points (DP, DP₁-DP₃) qui est fixé au dispositif de ramassage (200, 200a-2001) ou à un cadre de support (2, 2a-2c) du dispositif de ramassage (200, 200a-2001) dans une suspension à tube pendulaire (16, 16a, 16b) et est pivotant dans un mouvement pendulaire (PB) autour d'un axe pendulaire (PA).

5. Machine agricole (100, 100a-100h) avec au moins un dispositif de ramassage (200, 200a-2001), selon la revendication précédente 4, **caractérisée en ce que** la suspension à tube pendulaire (16, 16a, 16b) est à ressort.

6. Machine agricole (100, 100a-100h) avec au moins un dispositif de ramassage (200, 200a-2001) selon l'une des revendications précédentes, **caractérisée en ce que** l'entraînement rotatif (RA₁) du rouleau de ramassage (1, 1a-1f) est couplé à l'entraînement rotatif (RA₂) de l'auxiliaire de transport (FH, FH₁-FH₄).

7. Machine agricole (100, 100a-100h) avec au moins un dispositif de ramassage (200, 200a-2001), selon l'une des revendications précédentes 1-5, **caractérisée en ce que** l'entraînement rotatif (RA₁) du rouleau de ramassage (1, 1a-1f), l'entraînement rotatif (RA₂) de l'auxiliaire de transport (FH, FH₁-FH₄) et l'entraînement rotatif (RA₃) de la bande transporteuse transversale (10, 10a-10c) sont manoeuvrable séparément et individuellement.

8. Machine agricole (100, 100a-100h) avec au moins un dispositif de ramassage (200, 200a-2001), selon l'une des revendications précédentes 6 ou 7, **caractérisée en ce que** les entraînements rotatifs (RA₁-RA₃) sont commandables à distance.

9. Machine agricole (100, 100a-100h) avec au moins un dispositif de ramassage (200, 200a-2001), selon l'une des revendications précédentes, **caractérisée en ce que** le rouleau de ramassage (1, 1a-1f) comprend au moins deux rouleaux partiels (23c, 23d).

10. Machine agricole (100f) avec au moins un dispositif de ramassage (200f), selon la revendication précédente 9, **caractérisée en ce que** l'auxiliaire de transport (FH₄) comprend également au moins deux rouleaux partiels (23a, 23b) et les rouleaux partiels (23a-23d) sont reliés entre eux par des joints de cardan (24a, 24b).

11. Machine agricole (100, 100a-100h) avec au moins un dispositif de ramassage (200, 200a-2001), selon l'une des revendications précédentes, **caractérisée en ce que** l'auxiliaire de transport (FH, FH₁-FH₄) comprend au moins un rouleau de transport avec des éléments de transport individuels (4, 4a-4g).

12. Machine agricole (100, 100a-100h) avec au moins un dispositif de ramassage (200, 200a-2001), selon l'une des revendications précédentes 1-10, **caractérisée en ce que** l'auxiliaire de transport (FH, FH₁-FH₄) comprend un profil de transport (4, 4a-4g, 9, 9a-9c).

13. Machine agricole (100, 100a-100h) avec au moins un dispositif de ramassage (200, 200a-2001), selon l'une des revendications précédentes, **caractérisée en ce que** le rouleau de ramassage (1, 1a-1f) et/ou le rouleau de transport comprend un tuyau carré (17, 17a) avec des côtés carrés (18a-18f) sur lesquels sont disposées les dents de transport (5, 5a-5y).

14. Procédé pour formage et dépôt des andains (31a-31e) de fourrage ou de tiges du fourrage (FG₁-FG₆) avec une machine agricole (100e) avec une direction de déplacement (FR₁, FR₂) et un axe de direction de déplacement (FRA) et avec au moins un dispositif de ramassage (200e) selon l'une des revendications précédentes 3-13, **caractérisé en ce que** les étapes suivantes sont exécutées:
a)- actionnement du premier entraînement rotatif (RA₅) du rouleau de ramassage (1e);
b)- actionnement du deuxième, tournant en sens inverse, entraînement rotatif (RA₆) de l'auxiliaire de transport (FH₃);
c)- actionnement du troisième entraînement rotatif (RA₃) de la bande transporteuse transversale (10c);
d)- réglage et adaptation des vitesses de rotation des trois entraînements rotatifs (RA₅, RA₆, RA₃) les uns aux autres;
e)- réglage d'un écartement vertical en hauteur (A) et d'un décalage horizontal (V) de l'axe de rotation de l'auxiliaire de transport (FH₃) le long de l'axe de déplacement (FRA) devant, à distance égale ou derrière l'axe de rotation du rouleau de ramassage (1e);
f)- mise en mouvement de la machine agricole (100e) sur une surface agricole (F₁-F₆) avec du fourrage ou des tiges du fourrage (FG₁-FG₆) ;
g)- réglage et adaptation des vitesses de rotation des trois entraînements rotatifs (RA₅, RA₆, RA₃) pendant le déplacement ;
h)- réglage et adaptation de l'écartement vertical en hauteur (A) et du décalage horizontal (V) de l'axe de rotation de l'auxiliaire de transport (FH₃) le long de l'axe de déplacement (FRA) devant, à distance égale ou derrière l'axe de rotation du rouleau de ramassage (1e).
